# EUROPEAN PATENT APPLICATION

(11) **EP 4 703 219 A1**
(43) Date of publication of application: **04.03.2026**
(21) Application number: 24197953.3
(22) Date of filing: 02.09.2024
(51) Int. Cl.: B60T 13/26, B60T 13/68

(54) **ELECTRONIC PARKING BRAKE SYSTEM**

(71) Applicant: KB Intellectual Property GmbH & Co. KG, 82049 Pullach (DE)
(72) Inventor: Jenei, Márton Levente, 80809 Munich (DE)

(57) **Abstract**

An electronic parking brake system for a truck coupled to a trailer is disclosed. The truck includes one or more spring brakes (10) and an air reservoir (20) for providing a supply pressure. The electronic parking brake system comprises an electronic parking brake (100), a trailer control valve (200), and a supply valve (300). The electronic parking brake (100) includes a spring brake port (110) for operating the spring brakes (10), a trailer control port (120) and an input port (130) for the supply pressure. The trailer control valve (200) includes a trailer supply port (210), a trailer brake control port (220), a control port (230) connected to the spring brake port (110), and an input port (240) for the supply pressure. The trailer control valve (200) is adapted to provide a trailer control pressure based on a control pressure received at the control port (230). The supply valve (300) includes a control input (310) connected to the trailer control port (120), an inlet (320) for the supply pressure, and a supply port (330) connected to the input port (240) of the trailer control valve (200). The supply valve (300) is configured to provide the supply pressure based on a pressure value at the control input (310).

## Description

The present invention relates to an electronic parking brake system and, in particular, to an electronic parking brake system solution with a trailer supply dump functionality.

Due to legal and functional requirements, current trucks with an electronic parking brake (EPB) produced in Europe have to be fitted with a supply dump valve (SDV) before they can be used in Australia. According to a conventional solution a supply dump valve is arranged between the trailer control valve (or trailer control module) and the trailer.

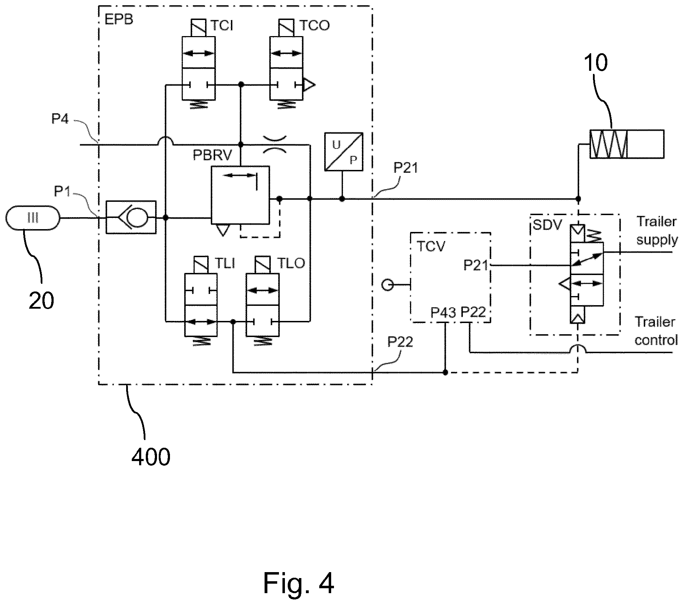

**Fig. 4** shows such a conventional electronic park brake system with an electronic park brake (EPB) 400, the trailer control valve TCV, and the supply dump valve SDV. The electronic park brake 400 is connected to an air supply 20 via an input port P1. The electronic park brake module 400 has a spring brake port P21 connected to a spring brake 20 and has a trailer control port P22 connected to the trailer control valve TCV (more accurately, to its control input P43). The trailer control valve TCV receives supply pressure and has an output P21 for the supply pressure and a trailer control output P22. The trailer control valve is controlled via the control input P43.

The electronic park brake 400 includes a park brake relay valve PBRV with a control port controlled by a truck IN, normally open solenoid-valve TCI (for inflating the control port) and a truck OUT, normally open solenoid-valve TCO (for deflating the control port). The park brake relay valve PBRV inflates/deflates the spring brake port P21 based pressure levels at its control port.

The trailer control valve TCV provides the supply pressure to the supply dump valve SDV, which in turn provides the supply pressure to the trailer. The supply dump valve SDV is controlled by a pressure difference between the trailer control output P22 and the spring brake port P21. The supply dump valve SDV further comprises an exhaust port and is adapted to provide on the trailer supply line either the supply pressure or, alternatively, to exhaust the trailer supply line. In addition, a trailer control line is connected with a control output line P22 of the trailer control valve TCV.

The conventional electronic brake 400 includes a trailer IN-valve TLI and a trailer OUT-valve TLO, wherein the trailer IN-valve is a solenoid, normally open valve which connects or disconnects a connection between the trailer control port P22 and the air reservoir 20. The trailer OUT-valve TLO is a solenoid, normally closed valve which alternatively connects the trailer control port P22 to the spring brake port P21 based on control signals received by the solenoid valve. In a default positions, the trailer IN solenoid-valve TLI connects the air reservoir 20 with the trailer control port P22 and the trailer OUT solenoid-valve disconnects the spring brake port P21 from the trailer control port P22.

However, the utilized supply dump valve SDV with the two control lines are expensive and there a need for a simpler solution while providing the same functionality of exhausting the trailer supply air when the park brake is applied.

At least some of the problems of the conventional electronic parking brake system as described before are overcome by an electronic parking brake system according to claim 1 or a method according to claim 7. The dependent claims refer to further advantageous realizations of the subject matter of the independent claims.

The present invention relates to an electronic parking brake system for a truck coupled to a trailer. The truck includes one or more spring brakes and an air reservoir for providing a supply pressure. The electronic parking brake system includes an electronic parking brake, a trailer control valve, and a supply valve. The electronic parking brake comprises a spring brake port for operating the spring brakes, a trailer control port and an input port for the supply pressure. The trailer control valve comprises a trailer supply port, a trailer brake control port, a control port connected to the spring brake port, and an input port for the supply pressure. The trailer control valve is adapted to provide a trailer control pressure based on a control pressure received at the control port (may include a pressure inversion). The supply valve comprises a control input connected to the trailer control port, an inlet for the supply pressure, and a supply port connected to the input port of the trailer control valve. The supply valve is configured to provide the supply pressure based on a pressure value at the control input (e.g. a simple forwarding).

The supply valve thus allows to exhaust the trailer supply port (or the trailer support line connected to the port) even when spring brakes are activated (e.g. deflating the trailer control port), namely by controlling the trailer control port to deflate.

Optionally, the supply valve includes or is a relay valve, or includes or is a 3/2-valve.

Optionally, the electronic parking brake includes a 3/2-trailer solenoid-valve. The 3/2-trailer solenoid-valve comprises a control port, an inlet port, and a supply port. The 3/2-trailer solenoid-valve is switchable between an activated state and a deactivated state. In the activated state the input port of the electronic parking brake is connected to the trailer control port. In the deactivated state the spring brake port is connected to the trailer control port.

The trailer control valve may be configured to forward the supply pressure from input port to the trailer supply port, and to forward an inverted control pressure at the control port to the trailer brake control port. Then, optionally, the system includes a control unit configured to control the 3/2-trailer solenoid-valve
- in a charging state by placing the 3/2-trailer solenoid-valve in the activated state, or
- in a dumping state by placing the 3/2-trailer solenoid-valve in the deactivated state.

In the charging state, the supply pressure is provided to the trailer supply port even if the spring brake port is exhausted and the spring brakes may be activated. In the dumping state, the supply pressure is exhausted from the trailer supply port if the spring brake port is exhausted and the spring brakes may be activated.

Optionally, the electronic parking brake includes one or more or all of the following:
- a park brake relay valve with control port, an inlet port connected to the input port (of the electronic parking brake), and an outlet port connected to the spring brake port;
- control line input connected to the control port of the park brake relay valve;
- an IN solenoid-valve for pressurizing, in its activated state, the control port of the park brake relay valve;
- an OUT solenoid-valve for deflating, in its activated state, the control port of the park brake relay valve;
- a pressure sensor for sensing a pressure at the spring brake port;
- a throttle valve connected between the control port of the park brake relay valve and the spring brake port;
- a check valve preventing an airflow towards the input port.

The IN/OUT solenoid-valve are normally closed valves and provide an electronic control of the parking brake. This may be managed by the control unit that provides respective control signals to the IN/OUT solenoid-valves to control the park brake relay valve accordingly.

Further embodiments relate to a commercial vehicle, in particular a truck, configured to couple to one or more trailers. The vehicle comprises an electronic park brake system as described before.

Further embodiments relate to a method for operating an electronic park brake system as described before. The method may include the steps:
- providing the supply pressure, in a charging state, to the trailer supply port even if the spring brake port is exhausted and the spring brakes are activated; and/or
- exhausting the supply pressure from the trailer supply port if the spring brake port is exhausted and the spring brakes are activated.

It is understood that both steps may be performed at different times or different situations.

This method or at least some steps thereof may be implemented in software or a computer program product. Embodiments of the present invention can, in particular, be implemented by software or a software module in an electronic control unit (e.g. of the service or parking brake system). Therefore, embodiment relate also to a computer-readable storage device having instructions stored thereon for performing the method, when the instructions are executed on a processor.

Embodiments overcome the problems of the conventional supply dump valves using a supply valve arranged between the trailer control valve and the trailer control port of the electronic parking brake. Advantageously, this supply valve is a relay valve or a 3/2 pneumatic valve which provides - in combination with the trailer control valve - the same functionalities as the supply dump valve of the conventional system as described above. In particular, the trailer supply air can be ventilated by the supply valve instead of the conventional supply dump valve (arranged at a different position). The trailer control valve may be still part of the system. The electronic park brake system can be utilized for a braked trailer variant, where the trailer is also braked in the parking state of the truck (as utilized for road trains in Australia, e.g.).

Embodiments provide the further advantage that the parking brake system layout of a truck-trailer combination is simplified and less expensive. This can be achieved by using a simple supply valve such as a relay valve or a 3/2 valve that control the supply input of the trailer control valve.

Some examples of the systems and/or methods will be described in the following by way of examples only, and with respect to the accompanying figures, in which:
- Fig. 1: depicts an electronic park brake system according to an embodiment of the present invention.
- Fig. 2: depicts further details of the electronic park brake system according to another embodiment.
- Fig. 3: depicts further details of the electronic park brake system according to yet another embodiment.

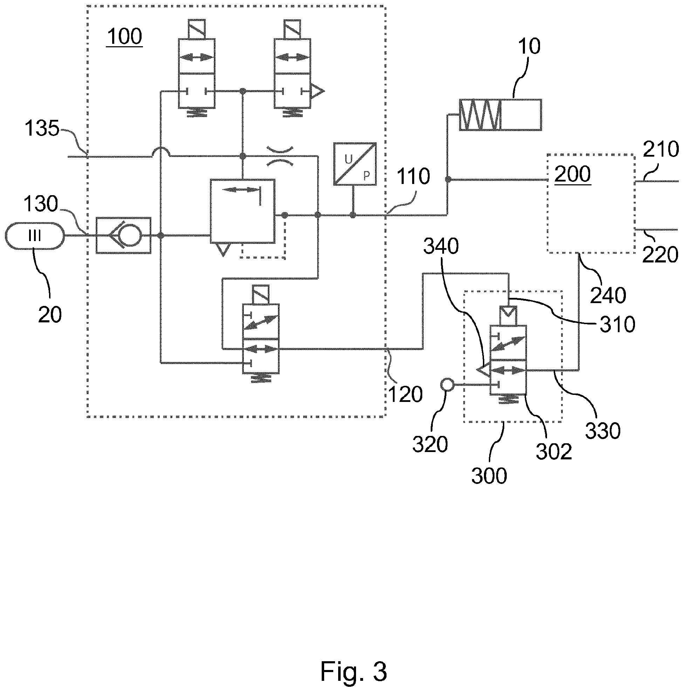

- Fig. 3: depicts a conventional electronic park brake system.

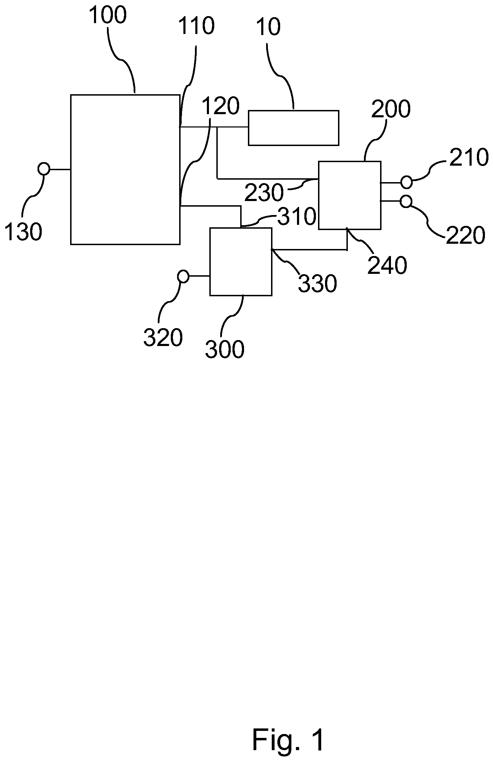

**Fig. 1** depicts an electronic park brake system according to an embodiment of the present invention. The electronic parking brake system is suitable or adapted for a truck coupled to one or more trailers (i.e. a vehicle combination), wherein the truck includes one or more spring brakes 10 as parking brakes and an air reservoir 20 for providing a (air) supply pressure. The electronic park brake system comprises: the electronic parking brake 100, a trailer control valve 200, and a supply valve 300. The electronic parking brake 100 includes a spring brake port 110 for connecting to the spring brakes 10, a trailer control port 120, and an input port 130 for the supply pressure. The trailer control valve 200 includes a trailer supply port 210, a trailer brake control port 220, a control port 230 connected to the spring brake port 110, and an input port 240 for the supply pressure. The trailer control valve 200 is adapted to provide a trailer control pressure at the trailer brake control port 220 based on a control pressure received at the control port 230. The supply valve 300 includes a control input 310 connected to the trailer control port 120, an inlet 320 for the supply pressure, and a supply port 330 connected to the input port 240 of the trailer control valve 200. The supply valve 300 is adapted to provide the supply pressure based on a pressure value at the control input 310.

The trailer control valve 200 may be configured to forward the supply pressure from input port 240 to the trailer supply port 210, and to forward an inverted control pressure at the control port 230 to the trailer brake control port 220. If the inlet 320 is exhausted (e.g. no supply pressure available), the trailer supply port 210 and the trailer brake control port 220 may be exhausted.

According to embodiments, dependent on a pressure level at the trailer control port 120 of the electronic parking brake 100, the supply valve 300 allows a dumping state and a charging state. For example, when the trailer control port 120 is exhausted (deflated) the supply port 330 of the supply valve 300 is exhausted, which in turn exhausts the trailer supply port 210 (dumping state). On the other hand, when the trailer control port 120 is inflated (e.g. receives the supply pressure), the supply port 330 of the supply valve 300 is inflated, which in turn inflates the trailer supply port 210 (charging state). Both states (or modes) are available (even) if the springs brakes 10 are activated at the truck (i.e. the spring park port 110 and thus the control port 230 of the trailer control valve 200 are exhausted).

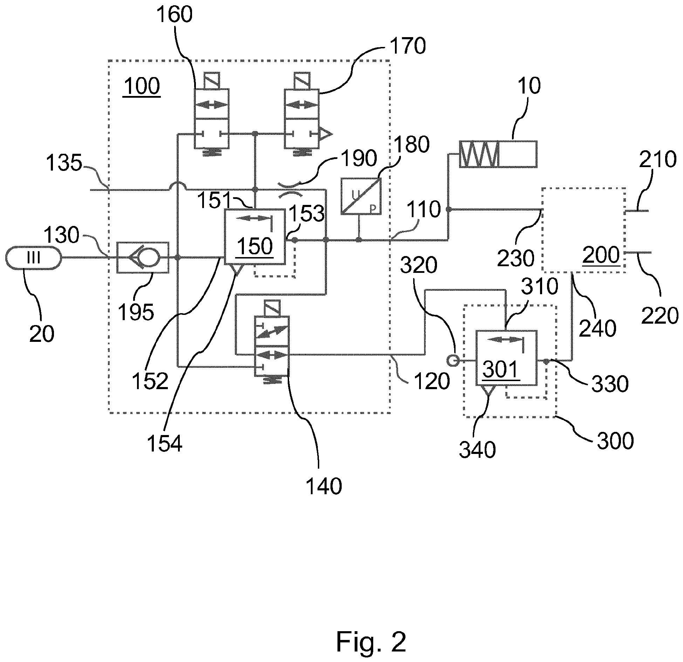

**Fig. 2** depicts the electronic park brake system according to an embodiment of the present invention, wherein the supply valve 300 is a relay valve. The relay valve 300 comprises the control input 310 connected to the trailer control port 120, the inlet 320 for the supply pressure, the supply port 330 connected to the input port 240 of the trailer control valve 200, and an exhaust port 340. In addition, further details of the electronic park brake 100 are shown. In detail, the electronic park brake 100 includes a 3/2-trailer solenoid-valve 140, a park brake relay valve 150, an IN solenoid-valve 160, an OUT solenoid-valve 170, a pressure sensor 180, a throttle valve 190, and a check valve 195. In addition, an air reservoir 20 for the supply pressure is connected to the input port 130, and the electronic parking brake 100 includes a control line input 135 providing an pneumatic control of the park brake relay valve 150.

The check valve 195 is arranged between the air reservoir 20 and an inlet port 152 of the park brake relay valve 150. The 3/2 trailer solenoid-valve 140 selectively connects the trailer control port 120 either with the inlet port 152 or with an outlet port 153 of the park brake relay valve 150. The outlet port 153 of the park brake relay valve 150 is connected to the spring brake port 110. Therefore, the 3/2-trailer solenoid-valve 140 connects either the supply pressure from the air reservoir 20 to the trailer control port 120 or, alternatively, the spring brake port 110 to the trailer control port 120. According to embodiments, the 3/2-trailer solenoid-valve 140 is a monostable valve with a default (stable) position where the spring brake port 110 is connected to the trailer control port 120. In the instable or activated position, the 3/2-trailer solenoid-valve 140 connects the input port 130 of the electronic parking brake 100 to the trailer control port 120.

The IN solenoid-valve 160 is arranged between the inlet port 152 of the park brake relay valve 150 and the control port 151 of the park brake relay valve 150. The OUT solenoid-valve 170 is arranged between the control port 151 of the park brake relay valve 150 and an exhaust port. The IN solenoid-valve 160 and the OUT solenoid-valve 170 are normally open valves, i.e. disconnect in the default (stable) position the control input 151 of the park brake relay valve 150 from the exhaust port and the inlet port 152 of the park brake relay valve 150, resp. When controlling the IN/OUT solenoid-valves 160, 170, the control pressure at the control port 151 can be modulated (e.g. by electronically controlling the IN/OUT solenoid-valves by a control unit, not shown). Alternatively, or in addition, the park brake relay valve 150 can be pneumatically controlled via the control line input 135.

The throttle valve 190 is connected between the control port 151 of the park brake relay valve 150 and the spring brake port 110. The pressure sensor 180 is configured to sense a pressure at the spring brake port 110 (e.g. to monitor the application of the spring brakes 10 and/or the controlling of the trailer control valve 200).

**Fig. 3** illustrates another embodiment for the electronic park brake system, which differs from the embodiment shown in Fig. 2 only in that the relay valve 301 is replaced by a 3/2-valve 302, which again can be a monostable valve with the control input 310 connected to the trailer control port 120, the inlet 320 for the supply pressure, the supply port 330 connected to the input port 240 of the trailer control valve 200, and an exhaust port 340. In the stable position, the 3/2 valve connects the supply port 330 to the exhaust port 340 to exhaust, as a default position, the input port 240 of the trailer control valve 200. This, in turn, may exhaust the trailer supply port 210 and thus the trailer(s). Therefore, by default, the system may be in the dump state.

The trailer control port 120 can thus control the 3/2-valve 302 either in a state where the input port 240 of the trailer control valve 200 is exhausted (default position) or, when actuated by inflating the trailer control port 120, the input port 240 of the trailer control valve 200 is connected to the supply pressure received from the inlet 320.

Therefore, both embodiments shown in Fig. 2 and Fig. 3 allow the charging state and the dumping state. During dumping, the spring brakes 10 are actuated at the truck (that means that the spring brake port 110 is exhausted) and the 3/2-trailer solenoid-valve 140 is its stable position so that the control input 310 of the relay valve 301 or of the 3/2-valve are exhausted which in turn exhausts trailer supply port 210. During charging, the spring brakes 10 may still be actuated at the truck (that means that the spring brake port 110 is exhausted), but the 3/2-trailer solenoid-valve 140 is now activated so that the control input 310 of the relay valve 301 or of the 3/2-valve are inflated (receive supply pressure) which in turn inflates the trailer supply port 210.

The description and drawings merely illustrate the principles of the disclosure. It will thus be appreciated that those skilled in the art will be able to devise various arrangements that, although not explicitly described or shown herein, embody the principles of the disclosure and are included within its scope.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: spring brake(s)
- 20: air reservoir for supply pressure
- 100: electronic parking brake
- 110: spring brake port
- 120: trailer control port
- 130: input port
- 135: control line input
- 140: 3/2-trailer solenoid-valve
- 150: park brake relay valve
- 151: control port of park brake relay valve
- 152: inlet port of park brake relay valve
- 153: outlet port of park brake relay valve
- 154: exhaust port
- 160: IN solenoid-valve
- 170: OUT solenoid-valve
- 180: pressure sensor
- 190: throttle valve
- 195: check valve
- 200: trailer control valve
- 210: trailer supply port
- 220: trailer brake control port
- 230: control port
- 240: input port
- 300: supply valve
- 301: relay valve
- 302: 3/2-valve
- 310: control input
- 320: inlet
- 330: supply port

## Claims

1. An electronic parking brake system for a truck coupled to a trailer, the truck including one or more spring brakes (10) and an air reservoir (20) for providing a supply pressure,
**characterized by:**
- an electronic parking brake (100) with a spring brake port (110) for operating the spring brakes (10), a trailer control port (120), and an input port (130) for the supply pressure;
- a trailer control valve (200) with a trailer supply port (210), a trailer brake control port (220), a control port (230) connected to the spring brake port (110), and an input port (240) for the supply pressure, the trailer control valve (200) being adapted to provide a trailer control pressure based on a control pressure received at the control port (230); and
- a supply valve (300) with a control input (310) connected to the trailer control port (120), an inlet (320) for the supply pressure, and a supply port (330) connected to the input port (240) of the trailer control valve (200), the supply valve (300) is configured to provide the supply pressure based on a pressure value at the control input (310).

2. The electronic parking brake system according to claim 1, wherein the supply valve (300) is a relay valve (301) or a 3/2-valve (302).

3. The electronic parking brake system according to claim 1 or claim 2, wherein the electronic parking brake (100) includes:
a 3/2-trailer solenoid-valve (140) with a control port, an inlet port, and a supply port, the 3/2-trailer solenoid-valve (140) being switchable between an activated state and a deactivated state, the activated state connecting the input port (130) to the trailer control port (120), the deactivated state connecting the spring brake port (110) to the trailer control port (120).

4. The electronic parking brake system according to claim 3, wherein the trailer control valve (200) is configured to forward the supply pressure from the input port (240) to the trailer supply port (210), and to forward an inverted control pressure at the control port (230) to the trailer brake control port (220), the system further including:
a control unit configured to control the 3/2-trailer solenoid-valve (140)
- in a charging state by placing the 3/2-trailer solenoid-valve (140) in the activated state, or
- in a dumping state by placing the 3/2-trailer solenoid-valve (140) in the deactivated state,
wherein in the charging state the supply pressure is provided to the trailer supply port (210) even if the spring brake port (110) is exhausted, and
wherein in the dumping state the supply pressure is exhausted from the trailer supply port (210) if the spring brake port (110) is exhausted.

5. The electronic parking brake system according to any one of claims 1 to 4, the electronic parking brake (100) including at least one of the following:
- a park brake relay valve (150) with control port (151), an inlet port (152) connected to the input port (130), and an outlet port (153) connected to the spring brake port (110);
- control line input (135) connected to the control port (151) of the park brake relay valve (150);
- an IN solenoid-valve (160) for pressurizing, in an activated state, the control port (151) of the park brake relay valve (150);
- an OUT solenoid-valve (170) for deflating, in an activated state, the control port (151) of the park brake relay valve (150);
- a pressure sensor (180) for sensing a pressure at the spring brake port (110);
- a throttle valve (190) connected between the control port (151) of the park brake relay valve (150) and the spring brake port (110);
- a check valve (195) preventing an airflow towards the input port (130).

6. A commercial vehicle, in particular a truck, configured to couple to at least one trailer with an electronic parking brake system according to any one of claims 1 to 5.

7. A method for operating an electronic parking brake system according to any one of claims 3 to 5, the method including:
- providing the supply pressure, in a charging state, to the trailer supply port (210) even if the spring brake port (110) is exhausted and the spring brakes (10) are activated; or
- exhausting the supply pressure from the trailer supply port (210) if the spring brake port (110) is exhausted and the spring brakes (10) are activated.
